(19) Europäisches Patentamt
European Patent Office
Office européen des brevets

(11) **EP 3 933 074 A1**

(12) **EUROPEAN PATENT APPLICATION**
published in accordance with Art. 153(4) EPC

(43) Date of publication:
**05.01.2022 Bulletin 2022/01**

(51) Int Cl.:
***C25D 7/00*** (2006.01)   ***C25B 11/03*** (2021.01)

(21) Application number: **20767135.5**

(22) Date of filing: **28.02.2020**

(86) International application number:
**PCT/JP2020/008405**

(87) International publication number:
**WO 2020/179693 (10.09.2020 Gazette 2020/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.03.2019 JP 2019037793**

(71) Applicant: **Tanaka Kikinzoku Kogyo K.K.**
**Tokyo 100-6422 (JP)**

(72) Inventors:
• **SAITO Masaru**
**Hiratsuka-shi, Kanagawa 254-0021 (JP)**
• **ARIMOTO Tasuku**
**Hiratsuka-shi, Kanagawa 254-0021 (JP)**
• **UEDA Tetsuya**
**Hiratsuka-shi, Kanagawa 254-0021 (JP)**

(74) Representative: **Scott, Stephen John**
**YUJA Limited**
**Suite 4, Level 6**
**Broad Gate**
**22-26 The Headrow**
**Leeds LS1 8EQ (GB)**

(54) **POROUS BODY, ELECTROCHEMICAL CELL, AND METHOD FOR PRODUCING POROUS BODY**

(57)    A porous body includes: a porous electrically conductive base material having communication voids and a skeleton forming the voids; and a metal coating film provided on at least a portion of a surface of the skeleton, wherein a porosity of the porous electrically conductive base material is 10 % or more, 70 % by mass or more of the metal coating film exists in a region lying within 30 % from one surface of the porous body as measured in the thickness direction, and a thickness of an oxide film between the skeleton and the metal coating film is 2 nm or less in at least a part of the oxide film. An amount of a metal for the metal coating film has been reduced and growth of an oxide film between the base material and the metal coating film has been suppressed.

*FIG. 1*

**Description**

TECHNICAL FIELD

The present invention relates to a porous body, an electrochemical cell, and a method for manufacturing a porous body.

BACKGROUND ART

A porous body formed of an electrically conductive material has been used in various fields in recent years because it allows permeability of liquid/gas therethrough to be flexibly designed in accordance with applications.

For example, PTL 1 discloses a technique of using a titanium fiber body as a power feeder which is operated to electrify a polymer electrolyte membrane and electrode plates, bring supplied water into contact with the polymer electrolyte membrane to generate a gas, and discharge the gas thus generated in an electrolytic cell for water electrolysis.

CITATION LIST

Patent Literature

PTL 1: JP2004-315933 Laid-Open
PTL 2: JP2010-106322 Laid-Open

SUMMARY OF THE INVENTION

Technical Problems

A metal coating film may be formed at a surface of such an electrically conductive porous body as described above in order to impart the porous body with some physical properties. For example, it is possible in such a power feeder as disclosed in PTL 1 to lower contact resistance between the power feeder and electrodes or the like by forming a noble metal coating film at a surface to be in contact with the electrodes, of the power feeder.

Examples of a method for forming a metal coating film at a surface of a porous electrically conductive base material include electroplating and sputtering. These methods, however, have problems as described below.

In electroplating, a metal coating film (an electroplating film) is formed by directly applying voltage to a porous electrically conductive base material immersed in a plating solution. This method makes it possible to form a metal coating film in a relatively short time period but does not allow so much freedom of design in coating, whereby a metal coating film is formed basically on the entire surface, including pore interiors, of the porous electrically conductive base material.

That is, electroplating results in formation of a metal coating film in portions which need not be coated, as well, thereby consuming a significantly large amount of metal, which is not preferable in terms of cost reduction. This problem particularly matters when an expensive metal such as a noble metal is used as a plating metal.

In this regard, a method of utilizing masking is known as a method for forming a metal coating film by electroplating exclusively in portions which need to be coated with a metal. For example, electroplating may be carried out in a state where a surface on one side of a porous electrically conductive base material has been masked, so that a metal coating film is formed only on a surface on the other side of the porous electrically conductive base material.

However, in a case where a base material is porous, plating solution permeates the inner portion of the base material and thus a metal coating film is formed inside the base material, as well. Therefore, it is actually impossible by the method of utilizing masking to selectively form a metal coating film "only on a surface on the other side of the porous electrically conductive base material" as described above.

PTL 2 proposes forming an Au coating film only on the outermost surface of a foamed titanium plate by utilizing masking by a water repellent layer. Specifically, PTL 2 proposes: forming a water repellent layer on the whole surface of the skeleton of a foamed titanium plate; removing only the repellent layer at the leading edge end of each projected part of the outermost surface of the foamed titanium plate; and then forming an Au coating film on the outermost surface thus treated.

However, the method proposed by PTL 2 has to carry out a heating process at high temperature for solidifying the water repellent layer prior to formation of the Au coating film, thereby inevitably forming a thick oxide film between the base material and the Au coating film. Moreover, the method requires another heating process for removing the water repellent layer after formation of the Au coating film, thereby further thickening the oxide film.

Further, the method using masking described above requires a process of forming masking and a process of removing it, which processes make the whole production process complicated and thus disadvantageous in terms of productivity and production cost.

Sputtering forms a metal coating film by making metal particles impinge against a porous electrically conductive base material and attaching the metal particles to the base material. This method forms a metal coating film on the porous electrically conductive base material basically on a surface thereof facing a sputtering target and only on a portion of the surface visually observable from the exterior. Accordingly, the method allows selection of a portion where a metal coating film is to be formed in accordance with an application and thus a higher degree of design freedom than electroplating.

However, sputtering requires significantly longer time than electroplating when metal coating films having approximately the same thickness are formed by these two methods, respectively. Further, sputtering requires an expensive device for implementation thereof. Accordingly, sputtering is not preferable in terms of reducing cost in the production process.

Further, a porous electrically conductive base material having a metal coating film provided by sputtering has problems in performances thereof as described below.

A porous electrically conductive base material generally has a natural oxide film of approximately 3 nm to 8 nm thickness at a surface thereof and the natural oxide film tends to adversely affect properties to be imparted by a metal coating film (e.g., contact resistance reducing property). Accordingly, it is preferable that a natural oxide film is removed by a pretreatment prior to formation of a metal coating film. However, in a case where a metal coating film is formed on a porous electrically conductive base material by sputtering, it is difficult to remove an oxide film prior to sputtering because the porous electrically conductive base material is inevitably exposed to the atmosphere prior to sputtering. A porous electrically conductive base material having a metal coating film obtained by sputtering therefore has a thick natural oxide film between a skeleton of the porous electrically conductive base material and the metal coating film and thus exhibits poorer performances than that obtained by electroplating.

The present disclosure has been contrived in view of the aforementioned problems and an object thereof is to achieve in a porous body obtained by forming a metal coating film on a porous electrically conductive base material: reduction of an amount of a metal to be used for forming the metal coating film; and suppression of growth of an oxide film between the porous electrically conductive base material and the metal coating film, in a compatible manner.

The inventors of the present disclosure discovered as a result of a keen study for solving the aforementioned problems that these problems can be solved by providing a porous electrically conductive base material with an electroplating by utilizing a bipolar phenomenon, to form a metal coating film on the base material, thereby completing the present disclosure.

A porous body according to an embodiment of the present disclosure is a porous body comprising:

> a porous electrically conductive base material having communication voids and a skeleton forming the voids; and
> a metal coating film provided on at least a portion of a surface of the skeleton,
> wherein a porosity of the porous electrically conductive base material is 10 % or more,

>> 70 % by mass or more of the metal coating film exists in a region lying within 30 % from one surface of the porous body as measured in the thickness direction, and
>> a thickness of an oxide film between the skeleton and the metal coating film is 2 nm or less in at least a part of the oxide film.

In an embodiment of the present disclosure, the metal coating film may be a coating film formed by electroplating carried out by indirect power feeding utilizing a bipolar phenomenon.

A porous body according to another embodiment of the present disclosure may be a porous body comprising:

> a porous electrically conductive base material having communication voids and a skeleton forming the voids; and
> a metal coating film provided on at least a portion of a surface of the skeleton,
> wherein a porosity of the porous electrically conductive base material is 10 % or more, and
> the metal coating film is a coating film formed by electroplating carried out by indirect power feeding utilizing a bipolar phenomenon.

In an embodiment of the present disclosure, the average thickness of the oxide film may be 6 nm or less.

In an embodiment of the present disclosure, the metal coating film may be made of at least one noble metal selected from the group consisting of Au, Ag, Pt, Pd, Rh, Ir, Ru, and Os or an alloy thereof.

In an embodiment of the present disclosure, the porous electrically conductive base material may be made of at least one selected from the group consisting of a metal, carbon, and Si.

In an embodiment of the present disclosure, the porous electrically conductive base material may be made of at least one selected from the group consisting of Ti, Ta, Zr, Nb, Cu, Al, Fe, Ni, C, and Si.

In an embodiment of the present disclosure, the porous electrically conductive base material may be made of Ti or a Ti alloy.

An electrochemical cell according to another embodiment of the present disclosure is an electrochemical cell comprising:

a power feeder;
an opposite power feeder provided to be opposed to the power feeder; and
a polymer electrolyte membrane interposed between the power feeder and the opposite power feeder,
wherein the power feeder is made of the porous body according to any of the aforementioned embodiments, and
the porous body as the power feeder is provided such that said one surface thereof is disposed on the side of the polymer electrolyte membrane.

A method for manufacturing a porous body according to another embodiment of the present disclosure is a method for manufacturing a porous body including: a porous electrically conductive base material having communication voids and a skeleton forming the voids; and a metal coating film provided on a portion of a surface of the skeleton, wherein the method comprises:

providing the porous electrically conductive base material between a cathode and an anode; and
applying a voltage between the anode and the cathode in a state where at least a portion of a surface on the side of the anode, of the porous electrically conductive base material, is in contact with a plating solution and at least a portion of a surface on the side of the cathode, of the porous electrically conductive base material, is in contact with a cathode electrolyte, thereby electrically polarizing the porous electrically conductive base material and forming the metal coating film thereon.

In an embodiment of the present disclosure, the application of a voltage may be carried out in a state where the plating solution and the cathode electrolyte are partitioned by the porous electrically conductive base material.

In an embodiment of the present disclosure, the application of a voltage may be carried out in a state where the surface on the side of the cathode, of the porous electrically conductive base material, is in contact with an auxiliary electrode.

According to the present disclosure, it is possible to provide a porous body including a porous electrically conductive base material and a metal coating film formed thereon, which porous body achieves in a compatible manner: reduction of an amount of a metal to be used for forming the metal coating film; and suppression of growth of an oxide film between the porous electrically conductive base material and the metal coating film.

BRIEF DESCRIPTION OF THE DRAWINGS

FIG. 1 is a schematic drawing showing a porous body according to an embodiment of the present disclosure.
FIG. 2 is a schematic drawing showing an example of a device for bipolar electroplating according to an embodiment of the present disclosure.
FIG. 3 is a schematic drawing showing a state where a voltage is applied between an anode and a cathode in the example shown in FIG. 2.
FIG. 4 is a schematic drawing showing an example of a device for bipolar electroplating according to another embodiment of the present disclosure.
FIG. 5 is a schematic drawing showing a state where a voltage is applied between an anode and a cathode in the example shown in FIG. 4.
FIG. 6 is a schematic drawing showing an example of a device for bipolar electroplating according to yet another embodiment of the present disclosure.
FIG. 7 is a schematic drawing showing a state where a voltage is applied between an anode and a cathode in the example shown in FIG. 6.
FIG. 8 is a schematic drawing showing an example of a structure of an electrochemical cell according to an embodiment of the present disclosure.
FIG. 9 is a schematic drawing showing an example of a structure of an electrochemical cell according to another embodiment of the present disclosure.

FIG. 10A is a cross-sectional TEM image of fibers at a surface of a porous body obtained in Example 1.

FIG. 10B is a cross-sectional TEM image of fibers at a surface of a porous body obtained in Comparative Example 2.

DETAILED DESCRIPTION

Hereinafter, embodiments of the present disclosure will be described in detail. The embodiments described below by no means restrict the present disclosure. Members/portions causing the same effect may share the same reference numbers in the drawings and some explanations may be omitted or simplified to avoid repetition in this regard. The embodiments in the drawings are schematically shown for the purpose of facilitating understanding of the present disclosure and do not accurately represent the size and the dimension of the actual product.

In the present specification, "a surface of a skeleton of a porous electrically conductive base material" represents the entire surface of the skeleton including inner surfaces of pores existing in the porous electrically conductive base material. On the other hand, "a surface of a porous body" and "a surface of a porous electrically conductive base material" represent the macroscopically observed outermost surfaces thereof or imaginary surfaces of the porous body and the porous electrically conductive base material in which all pores are filled up and the porosities are presumed to be zero, respectively.

[Porous body]

First, a porous body according to an embodiment of the present disclosure will be described.

The porous body according to the present embodiment has a porous electrically conductive base material and a metal coating film.

(Porous electrically conductive base material)

The porous body according to the present embodiment has communication voids and a skeleton forming the voids. In other words, the porous electrically conductive base material is a base material made of an electrically conductive interconnected porous body.

Porosity: 10 % or more

A porosity of the porous electrically conductive base material according to the present embodiment is to be 10 % or more in terms of ensuring satisfactory permeability of liquid/gas therethrough. The porosity is preferably $\geq 20$ %, more preferably $\geq 30$ %, and further more preferably $\geq 40$ % for the same reasons as described above. The upper limit of the porosity is not particularly restricted and may be appropriately set in accordance with applications of the porous body. In general, the porosity of the porous electrically conductive base material is preferably $\leq 90$ % in terms of strength of the base material. The porosity of the porous electrically conductive base material is preferably $\leq 90$ % in terms of retaining a certain level of electrical conductivity, as well, because resistance of the porous electrically conductive base material increases when a proportion of the electrically conductive skeleton in the base material is small.

A porosity of the porous electrically conductive base material represents a value obtained by a formula: [1 - (weight of porous electrically conductive base material)/{(theoretical density of raw material of porous electrically conductive base material) $\times$ (volume of porous electrically conductive base material)}]. The "volume of porous electrically conductive base material" in the formula represents an apparent volume of the porous electrically conductive base material, i.e., a total volume as a sum of volumes of the skeleton and the voids of the porous electrically conductive base material.

Material of porous electrically conductive base material

Type of a material of the porous electrically conductive base material is not particularly restricted and any electrically conductive material can be used. An electrically conductive material represents a material having electrical resistivity of $\leq 1000$ $\Omega \cdot$ m in the present specification.

Any of an inorganic material, an organic material, and an inorganic-organic composite material can be used as the electrically conductive material. Examples of the electrically conductive material include a material made of at least one selected from the group consisting of metal, carbon, and Si. The material may be any of a simple substance, an alloy, a compound, and a composite material. A metal or a carbon material among the aforementioned examples is preferably used as the electrically conductive material. Alternatively, a carbon composite material or an electrically conductive carbon compound such as SiC may be used as the electrically conductive material. In a case where a Si material is used as the electrically conductive material, the Si material may optionally contain a dopant so that desired electrical conductivity is obtained.

For example, the porous electrically conductive base material is made of at least one material selected from the group consisting of Ti, Ta, Zr, Nb, Cu, Al, Fe, Ni, C, and Si in an embodiment of the present disclosure. The material has small electrical resistance and excellent corrosion resistance. Accordingly, the material is highly preferable in a case where the porous body is used as a power feeder of an electrochemical cell for a water electrolysis device or the like.

The porous electrically conductive base material is made preferably of Ti or an Ti alloy and more preferably of Ti among the aforementioned examples. Examples of the Ti alloy which is preferably used include an alloy of Ti and a metal selected from the group consisting of Al, V, Mo, Pd, Mn, Sn and Fe.

A configuration (microscopic configuration) of the skeleton of the porous electrically conductive base material is not particularly restricted and the skeleton may have any configuration. For example, the porous electrically conductive base material may be any of an aggregate of fibers (which will occasionally be referred to as a "fiber body" hereinafter), an aggregate of a particular material, a lamination of a plurality of nets, a film having through holes, and an assembly thereof. A fiber sintered body is preferably used and an unwoven cloth sintered body is more preferably used as the fiber body. In a case where the porous electrically conductive base material is a fiber body, a diameter of each fiber constituting the fiber body is not particularly restricted but preferably $\geq 10\ \mu m$ and $\leq 100\ \mu m$, for example. A sintered body of a particular material is preferably used as the aggregate of a particular material. A porous base material made of carbon fibers or a base material made of a porous C/C composite (carbon fiber reinforced carbon) may be used as the porous electrically conductive base material made of a carbon material.

A configuration (macroscopic configuration) of the porous electrically conductive base material is not particularly restricted, either, and the porous electrically conductive base material may have any configuration. The porous electrically conductive base material has preferably a configuration in which a pair of surfaces are opposed to each other, more preferably a rectangular configuration, and further more preferably a plate-like (film-like) configuration. It is particularly preferable that the porous electrically conductive base material has a plate-like (film-like) configuration in a case where porous bodies are used as a power feeder pair or an electrode pair. The porous electrically conductive base material is particularly preferably a plate-like fiber body. In a case where the porous electrically conductive base material has a plate-like configuration, thickness of the porous electrically conductive base material is preferably $\geq 0.05$ mm in terms of strength thereof and $\leq 5$ mm in terms of reducing production cost, making the devices incorporated therein compact, and ensuring satisfactory diffusion of liquid and gas therein.

The porous electrically conductive base material may have macroscopic irregularities at a surface thereof. It is possible to manufacture the porous body of the present disclosure without problems even when macroscopic irregularities exist at a surface of the porous electrically conductive base material, by conducting electroplating utilizing a bipolar phenomenon, as described below.

In the present disclosure, "macroscopic irregularities" represent irregularities which exceed the standard of microscopic irregularities attributed to pores at a surface of the porous electrically conductive base material.

(Metal coating film)

Material of noble metal coating film

Type of a material of the metal coating film is not particularly restricted and any metal may be used. Examples of the metal which can be used as a material for the metal coating film include at least one metal selected from the group consisting of nickel (Ni), chrome (Cr), copper (Cu), zinc (Zn), tin (Sn), gold (Au), silver (Ag), platinum (Pt), palladium (Pd), rhodium (Rh), iridium (Ir), ruthenium (Ru) and osmium (Os), and an alloy thereof. The metal coating film is made preferably of a noble metal or an alloy thereof and more preferably of at least one noble metal selected from the group consisting of gold (Au), silver (Ag), platinum (Pt), palladium (Pd), rhodium (Rh), iridium (Ir), ruthenium (Ru) and osmium (Os), or an alloy thereof in particular because then an effect of reducing cost is made conspicuous. Further, the metal coating film is preferably made of a noble metal or an alloy thereof in other cases, as well, where, for example, a metal coating film is formed in order to reduce contact resistance and/or improve corrosion resistance.

Distribution of metal coating film

The metal coating film is provided on a surface of the skeleton of the porous electrically conductive base material, i.e., a portion of the entire surface which includes: what is called an outer surface of the porous electrically conductive base material; and inner surfaces of pores existing in the porous electrically conductive base material.

The metal coating film is unevenly distributed (localized) on one surface side of the porous electrically conductive base material in the porous body of the present embodiment. Specifically, 70 % by mass or more of the metal coating film exists in a region lying within 30 % from one surface of the porous body as measured in the thickness direction in the porous body of the present embodiment. In other words, a ratio of the mass of the metal coating film existing in a region lying within 30 % from one surface of the porous body as measured in the thickness direction, with respect to the total mass of the metal coating film contained in the porous body, is ≥ 70 mass %.

As described above, when a metal coating film is formed in order to impart the porous electrically conductive base material with some properties, the metal coating film formed on the outer surface and the vicinities thereof of the porous electrically conductive base material works effectively, while the metal coating film formed in the inner portions of the base material may not contribute to imparting the base material with the intended properties. In this case, formation of the metal coating film in a portion other than the outer surface and the vicinities thereof of the porous electrically conductive base material fails to contribute to imparting the base material with the intended properties and rather needlessly increases production cost and possibly deteriorates diffusion of liquid and gas due to deterioration of wettability. However, the porous body of the present embodiment, in which the metal coating film is formed to be concentrated in the vicinities of one surface of the porous body, can considerably avoid such disadvantages as described above.

In view of this, preferably 80 % by mass or more and more preferably 90 % by mass or more of the metal coating film exists in a region lying within 30 % from one surface of the porous body as measured in the thickness direction.

Further, for the same reasons, 70 % by mass or more of the metal coating film exists in a region lying preferably within 20 % and more preferably within 10 % from one surface of the porous body as measured in the thickness direction in the porous body of the present embodiment.

Distribution in terms of amount of the existing metal coating film in the thickness direction of the porous body can be measured by the method described in Examples.

(Oxide film)

Thickness: 2 nm or less

Formation of an oxide film between the metal coating film and the skeleton of the porous electrically conductive base material is suppressed in the porous body of the present embodiment. Specifically, a thickness of an oxide film between the skeleton and the metal coating film is 2 nm or less in at least a part of the oxide film. Presence of an oxide film between the skeleton and the metal coating film may disturb satisfactorily obtaining properties which is supposed to be imparted by the metal coating film. However, even when an oxide film exists between the skeleton and the metal coating film, the oxide film may not have so much influence on the properties which is supposed to be imparted by the metal coating film as long as a thickness of the oxide film is 2 nm or less. Accordingly, the porous body of the present embodiment, in which formation of an oxide film between the skeleton and the metal coating film is suppressed as described above, can satisfactorily realize and express the properties which is supposed to be imparted by the metal coating film. The thinner oxide film is the better in this regard. Therefore, the lower limit of a thickness of the oxide film is not particularly restricted and may be zero. In other words, it is preferable that an oxide film does not exist between the skeleton and the metal coating film in at least a part of the skeleton. A thickness of the oxide film can be measured by a transmission electron microscope (TEM). Specifically, a thickness of the oxide film can be measured by the method described in Examples.

Average thickness is 6 nm or less

The average thickness of the oxide film is preferably 6 nm or less for the same reasons as described above. It is possible to further improve the properties of the porous body by setting the average thickness of the oxide film to be 6 nm or less. The average thickness of the oxide film is more preferably 5 nm or less. The thinner oxide film is the better. Therefore, the lower limit of the average thickness of the oxide film is not particularly restricted and may be zero. In other words, it is preferable that an oxide film does not exist between the skeleton and the metal coating film. The average thickness of the oxide film can be measured by a transmission electron microscope (TEM). Specifically, the average thickness of the oxide film can be measured by the method described in Examples.

Next, an example of the porous body in an embodiment of the present disclosure will be described with reference to the drawings.

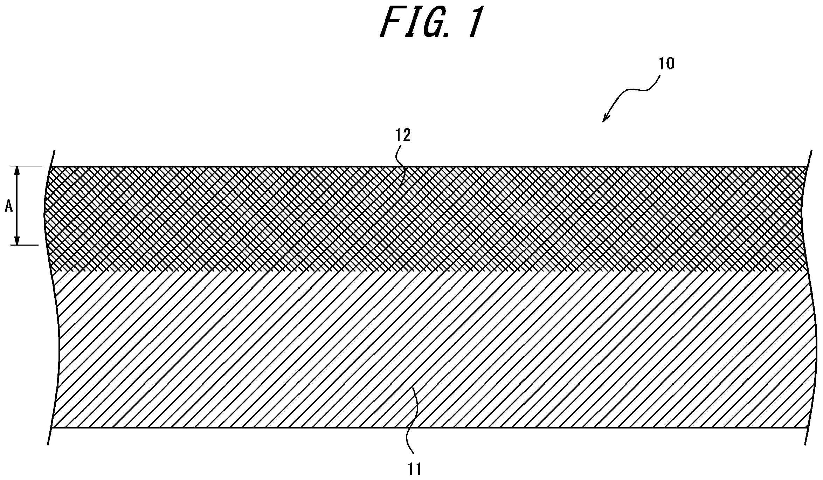

FIG. 1 is a schematic drawing showing a porous body 10 according to an embodiment of the present disclosure. The porous body 10 has: a porous electrically conductive base material 11 having communication voids and a skeleton forming the voids; and a metal coating film 12 provided on a portion of a surface of the skeleton. The porous electrically conductive base material 11 is a sheet-like member made of a porous material having porosity of 10 % or more and includes a pair of surfaces opposite to each other. 70 % by mass or more of the metal coating film 12 exists in a region A lying within 30 % from one surface of the porous body as measured in the thickness direction. A thickness of an oxide film between the skeleton of the porous electrically conductive base material 11 and the metal coating film 12 is 2 nm or less in at least a part of the oxide film.

The metal coating film 12 is an electroplating film formed by electroplating carried out by indirect power feeding utilizes a bipolar phenomenon described below. As described above, in a case where a metal coating film is formed by sputtering, a metal coating film is formed on a porous electrically conductive base material basically on a surface thereof facing a sputtering target and only on a portion of the surface visually observable from the exterior. In contrast, in a case where a metal coating film is formed by electroplating utilizing a bipolar phenomenon, the metal coating film is formed such that it enfolds the peripheries of the skeleton of the porous electrically conductive base material. Accordingly, when the skeleton of the porous electrically conductive base material 11 according to the present embodiment of the disclosure is microscopically analyzed in regard to the region where the metal coating film 12 has been formed, the region may include not only one surface side but also the other side of the opposite surfaces and another pair of opposite surfaces of the skeleton of the porous electrically conductive base material 11.

[Method for manufacturing porous body]

Next, a method for manufacturing a porous body according to an embodiment of the present disclosure will be described. The aforementioned porous body can be manufactured by the method described below.

In the embodiment of the present disclosure, the metal coating film is formed by: providing the porous electrically conductive base material between a cathode and an anode; and applying a voltage between the anode and the cathode in a state where at least a portion of a surface on the side of the anode, of the porous electrically conductive base material, is in contact with a plating solution and at least a portion of a surface on the side of the cathode, of the porous electrically conductive base material, is in contact with a cathode electrolyte, thereby electrically polarizing the porous electrically conductive base material and forming a metal coating film thereon.

According to the method described above, it is possible to form a metal coating film by feeding power indirectly (contactlessly) to the porous electrically conductive base material by utilizing a bipolar phenomenon and thus effecting electroplating (which will occasionally be referred to simply as "bipolar electroplating" hereinafter). Simply providing the porous electrically conductive base material between a cathode and an anode suffices for the bipolar electroplating. The cathode and the anode are provided so as to be separated from the porous electrically conductive base material, respectively, in this regard.

When a voltage is applied between the anode and the cathode, the porous electrically conductive base material is electrically polarized and a potential difference is generated therein. As a result, the side facing the anode, of the porous electrically conductive base material, has a relatively low potential, whereby the plating metal is selectively deposited at a surface and vicinities thereof on the side facing the anode, of the porous electrically conductive base material, so that a metal coating film is formed. On the other hand, the side facing the cathode, of the porous electrically conductive base material, has a relatively high potential, whereby a metal coating film is not formed on the side facing the cathode, of the porous electrically conductive base material. Accordingly, it is possible to obtain a porous body in which 70 % by mass or more of a metal coating film exists in a region lying within 30 % from one surface of the porous body as measured in the thickness direction.

In a case where a metal coating film is formed on a porous electrically conductive base material by sputtering, a metal coating film is formed on the porous electrically conductive base material at portions thereof exposed to the exterior in a plan view, whereby the metal coating film may possibly be formed in a deep inner portion in the thickness direction of the porous electrically conductive base material when the base material has a relatively large porosity. In contrast, according to the bipolar electroplating, a metal coating film is selectively formed on one surface side of the porous electrically conductive base material by utilizing an inner potential difference of the base material, whereby a metal coating film is not likely to be formed in portions other than the vicinities of the one surface even if those portions are exposed to the exterior in a plan view. Accordingly, the method of the present disclosure can more successfully concentrate the metal coating film within a surface region than the sputtering method.

It should be noted that, in the case where a metal coating film is formed on a porous electrically conductive base material by sputtering, a metal coating film is not formed on the porous electrically conductive base material in a portion thereof not exposed to the exterior in a plan view. In contrast, in the case of the bipolar electroplating, it is possible to form a metal coating film on the porous electrically conductive base material in portions thereof not exposed to the exterior in a plan view, i.e., the back surface and another pair of opposite surfaces of the skeleton of the porous electrically conductive base material, as well.

Type of the anode is not particularly restricted and any electrode can be used. Either a soluble electrode or an insoluble electrode can be used as the anode. Use of an insoluble electrode is preferable because of easy maintenance. A material of the anode may be appropriately selected in accordance with materials of a porous electrically conductive base material and a metal coating film to be formed and the type of plating solution. For example, as the insoluble electrode, use of an electrode made of titanium coated with a noble metal is preferable, use of an electrode (Pt/Ti electrode) made of titanium coated with platinum is more preferable, and use of a platinum-plated titanium electrode is further more preferable.

Similarly, type of the cathode is not particularly restricted and any electrode can be used. Either a soluble electrode or an insoluble electrode can be used as the electrode. Use of an insoluble electrode is preferable because of easy maintenance. A material of the cathode may be appropriately selected in accordance with materials of a porous electrically conductive base material and a metal coating film to be formed and the type of a cathode electrolyte. For example, as the insoluble electrode, use of an electrode made of titanium coated with a noble metal is preferable, use of an electrode (Pt/Ti electrode) made of titanium coated with platinum is more preferable, and use of a platinum-plated titanium electrode is further more preferable.

The anode and the cathode may be of either the same type or different types.

Configurations of the anode and the cathode are not particularly restricted and they may have any configurations, respectively. For example, the anode and the cathode may each independently have a planar, mesh, or expand metal-like configuration or the like.

(Plating solution)

Application of a voltage in the bipolar electroplating is carried out in a state where at least a portion of a surface on the side of the anode, of the porous electrically conductive base material, is in contact with a plating solution. Type of the plating solution is not particularly restricted and any plating solution can be used. The plating solution may be selected in accordance with a material of a metal coating film to be formed. Examples of the plating solution which can be used when a Pt coating film is to be formed as a metal coating film include an aqueous solution containing 8 g/L of Pt and 150 g/L of sulfuric acid.

(Cathode electrolyte)

On the other hand, the application of a voltage is carried out in a state where at least a portion of a surface on the side of the cathode, of the porous electrically conductive base material, is in contact with a cathode electrolyte. Type of the cathode electrolyte is not particularly restricted and any electrolyte can be optionally used. In general, an aqueous electrolyte solution can be used. The cathode electrolyte may be any optional plating solution and is preferably an electrolyte having the same composition as the plating solution provided on the anode side of the porous electrically conductive base material. Use of an electrolyte having the same composition as the plating solution provided on the anode side of the porous electrically conductive base material as the cathode electrolyte is very preferable because then the compositions of the cathode electrolyte and the plating solution do not change if the cathode electrolyte and the plating solution mix with each other. Alternatively, an electrolyte not containing plating metal may be used as the cathode electrolyte in terms of reliably preventing metal deposition at the cathode. Specifically, an electrolyte not containing a metal ion which would be reduced and deposited by the application of a voltage can be used. Preferable examples of the cathode electrolyte include an acid aqueous solution such as an aqueous solution of sulfuric acid (10 mass %).

In a case where the cathode electrolyte has a composition different from the composition of the plating solution provided on the anode side of the porous electrically conductive base material, it is preferable that formation of a metal coating film is carried out in a state where the plating solution and the cathode electrolyte are prevented from mixing with each other in terms of preventing a change in the composition of the plating solution from occurring. Specifically, in this case, it is preferable that the application of a voltage is carried out in a state where the plating solution and the cathode electrolyte are partitioned by the porous electrically conductive base material. The partitioning between the plating solution and the cathode electrolyte does not need to be effected only by the porous electrically conductive base material but other members may also be used for the purpose. For example, the plating solution and the cathode electrolyte can be partitioned from each other by the porous electrically conductive base material and a holding jig (the porous electrically conductive base material is fixed in a plating tank by the holding jig in this case).

(Pretreatment)]

Any optional pretreatment may be carried out for the porous electrically conductive base material prior to the bipolar electroplating. Type of the pretreatment is not particularly restricted and any optional pretreatment may be carried out. For example, pretreatments generally conducted in electroplating can be carried out. It is preferable to carry out as the pretreatment at least one selected from the group consisting of degreasing treatment, pickling, and rinsing with water. Type of the degreasing treatment is not particularly restricted and the degreasing treatment can be carried out by any optional method. Preferable examples of the degreasing treatment include ultrasonic degreasing and electrolytic degreasing.

An oxide film may possibly exist at a surface of the skeleton of the porous electrically conductive base material, depending on a material of the base material. A natural oxide film generally has a thickness in the range of 3 nm to 8 nm or so, although the thickness varies depending on the material of the porous electrically conductive base material.

Such an oxide film as this adversely affects the properties to be imparted by the metal coating film, as described above. Accordingly, it is preferable to remove an oxide film by the pretreatment.

Removal of an oxide film is not particularly restricted and may be carried out by any optional method. An oxide film can be removed by treating the porous electrically conductive base material with an acid. Type of the acid is not particularly restricted. It is preferable to use an aqueous solution containing at least one inorganic acid and it is more preferable to use an aqueous solution containing at least one selected from the group consisting of hydrochloric acid, nitric acid and sulfuric acid. The acid preferably contains a fluoride compound in terms of facilitating dissolution of an oxide film. It is preferable to use at least one selected from the group consisting of hydrofluoric acid and a hydrofluoric acid salt and it is more preferable to use at least one of hydrofluoric acid and ammonium hydrogen fluoride as the fluoride compound. The treatment with acid can be carried out by immersing the porous electrically conductive base material in the acid.

For example, in a case where a porous electrically conductive base material made of titanium is used, it is possible to preferably remove an oxide film by using an aqueous solution containing as the acid a fluoride compound and hydrochloric acid (e.g., an aqueous solution as a mixture of 2 wt.% ammonium hydrogen fluoride and 2 wt.% HC1). In a case where a porous electrically conductive base material made of stainless steel is used, it is preferable to use an aqueous solution containing hydrochloric acid as the acid (e.g., an aqueous solution of hydrochloric acid (15 mass %)). In a case where a porous electrically conductive base material made of copper is used, it is preferable to use an aqueous solution containing sulfuric acid as the acid (e.g., an aqueous solution of sulfuric acid (10 mass %)).

It is preferable to carry out rinsing with water after removing an oxide film, to remove chemicals or the like attaching to the porous electrically conductive base material. Pure water is preferably used for the rinsing. Further, it is preferable to bring the porous electrically conductive base material thus rinsed into contact with the plating solution in a state where the porous electrically conductive base material is wet with water, i.e., without bringing the base material into direct contact with air, so that an oxide film should not be formed on the base material again. That is, the method for manufacturing a porous body according to the present embodiment of the disclosure includes: removing an oxide film existing at a surface of the porous electrically conductive base material; then rinsing the porous electrically conductive base material with water; and (without drying the porous electrically conductive base material) providing the porous electrically conductive base material which is wet with water between the cathode and the anode, thereby bringing at least a portion of a surface on the side of anode, of the porous electrically conductive base material, into contact with the plating solution.

According to the method described above, it is possible to suppress formation of an oxide film between a skeleton of the porous electrically conductive base material and the metal coating film. When no oxide film exists at a surface of the porous electrically conductive base material, removal of an oxide film is not required.

It is preferable that the application of a voltage is carried out in a state where the plating solution and the cathode electrolyte are partitioned by the porous electrically conductive base material in the bipolar electroplating. If the bipolar electroplating were to be carried out in a state where the plating solution and the cathode electrolyte are not partitioned, the plating solution and the cathode electrolyte would mix with each other. Further, an electrical current flowing via the plating solution and the cathode electrolyte would reach the cathode, whereby a metal coating film might be deposited at the cathode in this case. Those problems can be prevented from occurring by carrying out plating in a state where the plating solution and the cathode electrolyte are partitioned by the porous electrically conductive base material.

For example, in a case where plating is carried out by providing an anode, a cathode and the porous electrically conductive base material in a plating tank, the plating tank is partitioned into an anode chamber and a cathode chamber by the porous electrically conductive base material, so that the anode and the plating solution are provided in the anode chamber and the cathode and the cathode electrolyte are provided in the cathode chamber. This arrangement successfully suppresses mixing of the plating solution and the cathode electrolyte. Other members (such as a holding jig, an auxiliary electrode described below, and the like) may also be used, in combination with the porous electrically conductive base material, for separating the plating solution and the cathode electrolyte from each other.

(Auxiliary electrode)

In the bipolar electroplating, an oxide film may possibly be formed on a surface facing the cathode, of the porous electrically conductive base material, depending on a material of the porous electrically conductive base material, whereby electric conduction in the base material is inhibited and plating stops at a surface facing the anode, of the porous electrically conductive base material. Further, some components of the porous electrically conductive base material may possibly dissolve in the cathode electrolyte, depending on a material of the porous electrically conductive base material, thereby causing contamination and failure in the system. In order to prevent those problems from occurring, it is preferable to apply a voltage between the anode and the cathode in a state where an auxiliary electrode is in contact with the surface on the side of the cathode, of the porous electrically conductive base material. When an auxiliary electrode is used, it suffices for the auxiliary electrode to be in contact with the cathode electrolyte.

In a case where an auxiliary electrode is used, it suffices for at least a portion of the surface on the side of the cathode, of the porous electrically conductive base material, to be in contact with the auxiliary electrode. However, it is preferable that the entire surface on the side of the cathode, of the porous electrically conductive base material, is in contact (covered) with the auxiliary electrode in terms of achieving highly uniform deposition of the metal coating film. Further, covering the entire surface on the side of the cathode, of the porous electrically conductive base material, with an auxiliary electrode such that the surface on the side of the cathode, of the porous electrically conductive base material, is not in direct contact with the cathode electrolyte successfully prevents the plating solution and the cathode electrolyte from mixing with each other through the voids of the porous electrically conductive base material.

Type of the auxiliary electrode is not particularly restricted and any electrode can be optionally used. Either a soluble electrode or an insoluble electrode can be used as the auxiliary electrode. Use of an insoluble electrode is preferable because of easy maintenance. A material of the auxiliary electrode may be appropriately selected in accordance with materials of a porous electrically conductive base material and a metal coating film to be formed and the type of cathode electrolyte. For example, as the insoluble electrode, use of an electrode made of titanium coated with a noble metal is preferable, use of an electrode (Pt/Ti electrode) made of titanium coated with platinum is more preferable, and use of a platinum-plated titanium electrode is further more preferable.

A current density in the bipolar electroplating may be appropriately adjusted in accordance with a material and/or the size of the porous electrically conductive base material, a composition of the plating solution, a thickness of the metal coating film to be formed, and the like. For example, in a case where a plating solution containing 8 g/L of Pt and 150 g/L of sulfuric acid is used when a Pt coating film is formed on a Ti fiber body, a current density is preferably $\geq$ 0.5 A/dm$^2$ and more preferably $\geq$ 1.0 A/dm$^2$ in terms of increasing a potential difference generated by electrical polarization in the porous electrically conductive base material.

Next, specific examples of the method for manufacturing a porous body according to an embodiment of the present disclosure and a device for use in the method for manufacturing a porous body will be described with reference to the drawings. These examples by no means restrict the present disclosure.

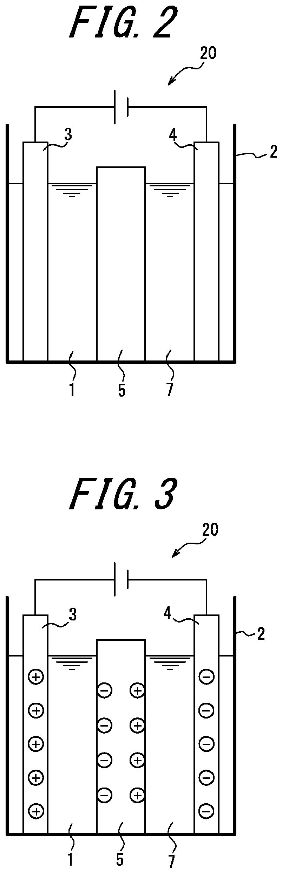

FIG. 2 is a schematic drawing showing an example of a device 20 for bipolar electroplating (which device will be referred to as a "plating device" hereinafter) according to an embodiment of the present disclosure. An anode 3 and a cathode 4 are provided inside a plating tank 2. A porous electrically conductive base material 5 is provided between the anode 3 and the cathode 4. The porous electrically conductive base material 5 is provided so as not to be in direct contact with the anode 3 and the cathode 4 but separated from each of them because power is indirectly fed in the bipolar electroplating. The porous electrically conductive base material 5 is a plate-like member having a pair of opposed surfaces. One of the opposed surfaces is opposite to the anode 3 and the other of the opposed surfaces is opposite to the cathode 4.

The porous electrically conductive base material 5 has an outer peripheral configuration and dimensions corresponding to the inner peripheral configuration and dimensions of the plating tank 2. The side surfaces and the bottom surface of the porous electrically conductive base material 5 are in contact with the inner peripheral side surfaces and the inner peripheral bottom surface of the plating tank 2. The plating tank 2 is partitioned into an anode chamber and a cathode chamber by the arrangement described above. The anode chamber is filled with a plating solution 1 and the cathode chamber is filled with a cathode electrolyte 7, respectively. The plating solution 1 and the cathode electrolyte 7 are prevented from mixing with each other because they are separated from each other by the porous electrically conductive base material 5.

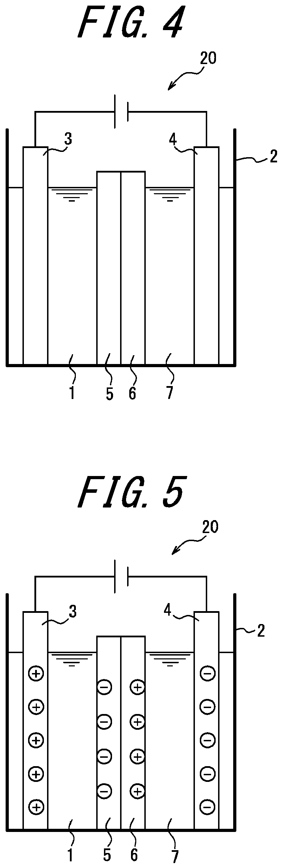

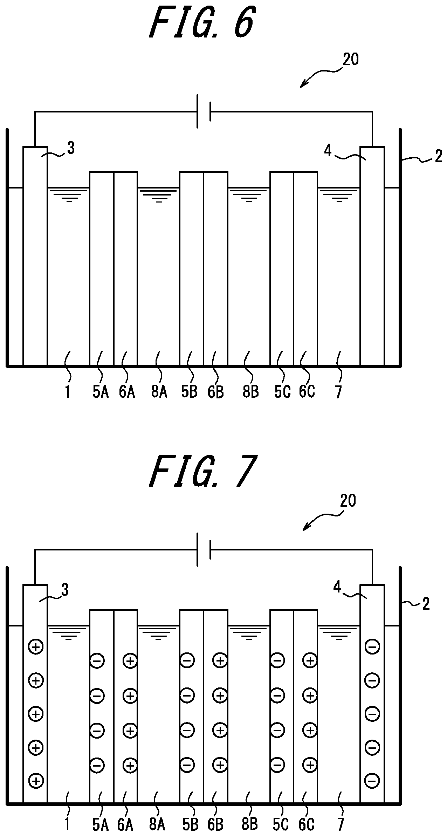

FIG. 3 is a schematic drawing showing a state where a voltage is applied between the anode 3 and the cathode 4 in the example shown in FIG. 2. When a voltage is applied between the anode 3 and the cathode 4, the porous electrically conductive base material 5 is electrically polarized by a bipolar phenomenon, whereby a potential difference is generated therein. Then, a metal coating film is formed so as to be concentrated on a surface opposite to the anode 3, of the porous electrically conductive base material 5, as shown in FIG. 3. A relatively high potential and a relatively low potential in electrically connected regions are indicated by "+" and "-", respectively, in FIG. 3. The same indications are also applied in FIG. 5 and FIG. 7 described below.

FIG. 4 is a schematic drawing showing an example of a device for bipolar electroplating according to another embodiment of the present disclosure. FIG. 5 is a schematic drawing showing a state where a voltage is applied between the anode 3 and the cathode 4 in the example shown in FIG. 4. The present embodiment is basically the same as the embodiment shown in FIGS. 2 and 3, except that the former differs from the latter in the features specifically described below.

An auxiliary electrode 6 is provided so as to be in contact with the surface on the side of the cathode 4, of the porous electrically conductive base material 5, in the example shown in FIGS. 4 and 5. The auxiliary electrode 6 has substantially the same dimensions as those of the porous electrically conductive base material 5 and the surface on the side of the cathode 4, of the porous electrically conductive base material 5, is covered with the auxiliary electrode 6. Accordingly, the surface on the side of the cathode 4, of the porous electrically conductive base material 5, is not in direct contact with the cathode electrolyte 7 but in contact therewith via the auxiliary electrode 6. Use of the auxiliary electrode 6 successfully prevents the porous electrically conductive base material 5 from being oxidized and dissolved by application of a voltage. The auxiliary electrode 6 is preferably larger in size than the porous electrically conductive base material 5 in terms of ensuring full contact of the auxiliary electrode 6 with the entire surface of the porous electrically conductive base material 5, although the auxiliary electrode 6 has substantially the same dimensions as those of the porous electrically conductive base material 5 in the example shown in FIGS. 4 and 5. The auxiliary electrode 6 may be fixed at the surface of the porous electrically conductive base material 5 by using a holding jig.

Further, an example of a method for efficiently carrying out the bipolar electroplating will be described below.

FIG. 6 is a schematic drawing showing an example of a device for bipolar electroplating according to yet another embodiment of the present disclosure. FIG. 7 is a schematic drawing showing a state where a voltage is applied between the anode 3 and the cathode 4 in the example shown in FIG. 6. The present embodiment is basically the same as the embodiment shown in FIGS. 4 and 5, except that the former differs from the latter in the features specifically described below.

A plurality of the porous electrically conductive base materials 5A, 5B, 5C are provided in series between the anode 3 and the cathode 4 in the embodiment shown in FIGS. 6 and 7. The surfaces on the side of the cathode 4, of the porous electrically conductive base materials 5A, 5B, 5C, are covered with the auxiliary electrodes 6A, 6B, 6C, respectively. It should be noted that use of the auxiliary electrode 6 is optional and the auxiliary electrode may be excluded in the present embodiment.

Application of a voltage between the anode 3 and the cathode 4 in such a state as described above electrically polarizes each of the porous electrically conductive base materials 5 due to a bipolar phenomenon, as shown in FIG. 7, thereby generating a potential difference inside the porous electrically conductive base material 5. As a result, a metal coating film is formed on each of the porous electrically conductive base materials 5 on the cathode 3 side thereof. According to this method, a plurality of the porous electrically conductive base materials 5 can be simultaneously provided with bipolar electroplating, whereby a plurality of the porous bodies can be efficiently manufactured.

Intermediate electrolytes 8A, 8B are provided in a space between the auxiliary electrode 6A and the porous electrically conductive base material 5B and a space between the auxiliary electrode 6B and the porous electrically conductive base material 5C, respectively, in the present embodiment. Plating solutions are used as the intermediate electrolytes 8A, 8B in the present embodiment, so that a metal coating film is formed on each of surfaces on the cathode 3 side, of the porous electrically conductive base material 5B and the porous electrically conductive base material 5C. The compositions of the plating solution 1, the intermediate electrolyte 8A, and the intermediate electrolyte 8B may be different from each other but preferably share the same composition. The composition of the cathode electrolyte 7 may be the same as that of the plating solution 1. The composition of the cathode electrolyte 7 may differ from that of the plating solution 1 in a case where the liquids provided in the respective regions are prevented from mixing each other.

Although FIGS. 6 and 7 show a case where three porous electrically conductive base materials 5 are simultaneously subjected to the bipolar electroplating, the number of the porous electrically conductive base material(s) is not particularly restricted and may be optionally selected.

[Electrochemical cell]

Applications of the porous body of the present disclosure are not particularly restricted and the porous body can be used for any optional application.

Examples of the application include a power feeder (gas diffusion layer) in an electrochemical cell. An example of an electrochemical cell using the aforementioned porous body as a power feeder will be described hereinafter.

An electrochemical cell according to an embodiment of the present disclosure has: a power feeder; an opposite power feeder provided to be opposed to the power feeder; and a polymer electrolyte membrane interposed between the power feeder and the opposite power feeder, wherein the power feeder is made of the aforementioned porous body. The power feeder may be either an anode power feeder or a cathode power feeder. In other words, the aforementioned porous body is applicable to any of an anode power feeder and a cathode power feeder. The opposite power feeder described above may also be formed of the porous body of the present disclosure.

The electrochemical cell includes an electrolytic cell and a fuel cell. Applications of the electrolytic cell are not particularly restricted and, for example, the electrolytic cell can be applied to an electrolytic cell for a water electrolysis device.

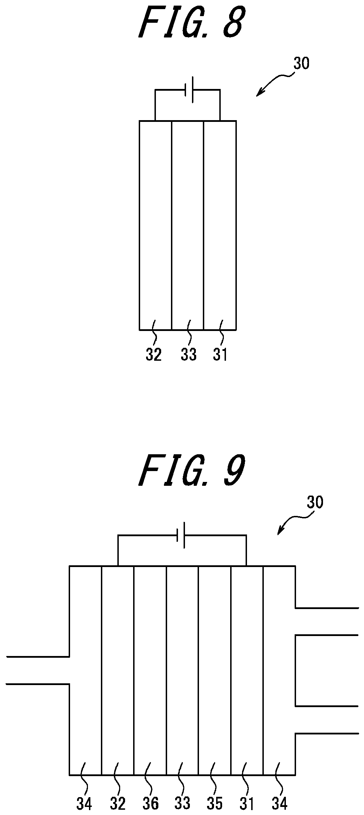

FIG. 8 is a schematic drawing showing an example of a structure of an electrochemical cell according to an embodiment of the present disclosure. The electrochemical cell 30 has: an anode power feeder 31; a cathode power feeder 32 provided to be opposed to the anode power feeder 31; and a polymer electrolyte membrane 33 interposed between the anode power feeder 31 and the cathode power feeder 32.

The polymer electrolyte membrane 33 is a membrane which causes hydrogen ions ($H^+$) generated on the anode side by electrolysis to move toward the cathode side. A cation-exchange membrane is preferably used as the polymer electrolyte membrane 33. For example, those conventionally used for the aforementioned purpose in the fields of electrodialysis and fuel cell are applicable to the polymer electrolyte membrane 33.

FIG. 9 is a schematic drawing showing an example of a structure of an electrochemical cell according to another embodiment of the present disclosure. It is preferable that separators 34 are provided on surfaces opposite to the polymer electrolyte membrane 33, of the anode power feeder 31 and the cathode power feeder 32, respectively, as shown in FIG. 9. Further, it is preferable that an anode catalytic layer 35 is provided between the polymer electrolyte membrane 33 and the anode power feeder 31 and a cathode catalytic layer 36 are provided between the polymer electrolyte membrane 33 and the cathode power feeder 32 in order to improve electrolysis efficiency.

Examples of the anode catalytic layer 35 and the cathode catalytic layer 36 include: a platinum group metal such as platinum, iridium; and an oxide of a platinum group metal such as platinum oxide and/or iridium oxide. In particular, iridium oxide is preferably used as the anode catalytic layer 35 and Pt is preferably used as the cathode catalytic layer 36.

The porous body of the present disclosure is applicable to the anode power feeder 31 and/or the cathode power feeder 32. The porous body of the present disclosure is preferably used as the anode power feeder 31 in particular. In a case where the porous body of the present disclosure is used as the anode power feeder 31, it is preferable that the porous electrically conductive base material is made of Ti or a Ti alloy and that the metal coating film is made of Pt or a Pt alloy. Further, in a case where the porous body of the present disclosure is used as the anode power feeder 31, it is preferable to place a surface on which the metal coating film has been formed in a concentrated manner, of the porous body, on the side of the polymer electrolyte membrane 33. In such an arrangement as described above, the metal coating film decreases contact resistance between the anode power feeder 31 and the polymer electrolyte membrane 33 and/or contact resistance between the anode power feeder 31 and the anode catalytic layer 35, while the porous body is not plated on the separator side thereof, whereby titanium of the anode power supply 31 exhibits superior wettability and an efficiency of water electrolysis significantly improves.

Type of the cathode power feeder 32 is not particularly restricted. For example, the porous body of the present embodiment or carbon paper can be used as the cathode power feeder 32.

The electrochemical cell 30 described above can be incorporated into, for example, a water electrolysis device for use in hydrogen production.

EXAMPLES

An effect of the present disclosure will be described in detail by Examples and Comparative Examples of the disclosure hereinafter. These Examples and Comparative Examples by no means restrict the present disclosure.

[Production of porous body]

A porous body was manufactured by forming a metal coating film on a surface of a skeleton of a porous electrically conductive base material according to the following steps.

< Example 1 >

(Preparation and pretreatment of porous electrically conductive base material)

A Ti fiber sintered body (54 mm × 54 mm, thickness: 0.3 mm, porosity: 56 %, and the average fiber diameter: 20 $\mu$m, manufactured by Bekaert Toko Metal Fiber Co., Ltd.) was used as a porous electrically conductive base material. First, a degreasing treatment of surfaces of the Ti fibers (the skeleton of the porous electrically conductive base material) was carried out by subjecting the porous electrically conductive base material to ultrasonic degreasing and then electrolytic degreasing. Next, the porous electrically conductive base material was immersed in a mixed aqueous solution of 2 wt. % ammonium hydrogen fluoride and 2 wt. % hydrochloric acid, retained in the mixed aqueous solution for approximately 30 seconds, and then immersed in an aqueous solution of 2 wt. % ammonium hydrogen fluoride and retained there for approximately 60 seconds, whereby a natural oxide film on the Ti fiber surfaces was removed.

(Bipolar electroplating)

Next, Pt/Ti plate electrodes were provided as an anode and a cathode in a plating solution (Pt: 8 g/L, sulfuric acid: 150 g/L, 60 °C). A the porous electrically conductive base material was provided between the electrodes. A Pt/Ti plate was provided as an auxiliary electrode such that the auxiliary electrode was in contact with a surface opposed to the cathode, of the porous electrically conductive base material. The porous electrically conductive base material and the auxiliary electrode were fixed to a plating tank by using a holding jig. Accordingly, a cathode electrolyte was the aforementioned plating solution in the system. The plating solution on the side of the anode was separated from the plating solution on the side of the cathode (the cathode electrolyte) by the porous electrically conductive base material, the auxiliary electrode, and the holding jig.

Next, bipolar electroplating with Pt was carried out by flowing a constant current to the anode and the cathode at 4.0 A/dm$^2$ for 35 seconds, whereby a porous body sample of Example 1 was obtained.

< Examples 2 to 7 >

Porous body samples of Examples 2 to 7 were obtained by carrying out bipolar electroplating under the same conditions as those in example 1, except that a material and porosity of the porous electrically conductive base material and a material of the metal coating film were changed as shown in Table 1, respectively. A porous electrically conductive base material made of stainless steel (54 mm × 54 mm, thickness: 0.3 mm, fiber diameter: 22 μm, and porosity: 56 %, manufactured by Bekaert Toko Metal Fiber Co., Ltd.) was used in Example 3. A porous electrically conductive base material made of carbon ("Spectracarb 2050A-1550" manufactured by Engineered Fibers Technology Co., Ltd.) was used in each of Example 4 and Example 5. The porous electrically conductive base material used in Examples 6 and 7 was basically the same as the Ti fiber sintered body used in Example 1, except that the former differs from the latter only in porosity. No auxiliary electrode was used in Example 5 for comparison.

< Comparative Example 1 >

A porous body sample of Comparative Example 1 was prepared in the same manner as in Example 1, except that the bipolar electroplating in Example 1 was replaced with the conventional electroplating in Comp. Example 1. The electroplating in Comp. Example 1 was carried out according to the following steps.

(Electroplating)

An expanded Pt/Ti electrode was provided as an anode in a plating solution similar to that of Example 1. A porous electrically conductive base material, which was the same type as that used in Example 1, was provided as a cathode such that the base material was opposed to the anode. Then, electroplating with Pt was carried out at constant current, whereby a porous body sample of Comparative Example 1 was obtained. The electroplating with Pt was carried out at a current density: 0.5 A/dm$^2$ for 4 minutes. Prior to the electroplating with Pt, strike plating was carried out at a current density: 1.5 A/dm$^2$ for 10 seconds. No masking was used in the electroplating.

< Comparative Example 2 >

A porous body sample of Comparative Example 2 was prepared in the same manner as in Example 1, except that a metal coating film was formed by sputtering, instead of the bipolar electroplating, in the former. The sputtering was carried out according to the following steps.

(Sputtering treatment)

A porous electrically conductive base material, which was the same type as that used in Example 1, was subjected to the same pretreatment according to the same steps as those in Example 1. Thereafter, the porous electrically conductive base material was dried at the room temperature for at least 12 hours. Next, the porous electrically conductive base material was placed in a sputtering device such that one surface of the base material was opposed to and in parallel with a Pt target. A magnetron sputter (MSP-20-UM type) manufactured by VCUUM DEVICE Co., Ltd. was used as the sputtering device. Sputtering was carried out by applying a voltage for 22 minutes such that discharge current was approximately 50 mA at the vacuum pressure of ≤ 3 Pa, whereby a Pt coating film was formed on the one surface (facing the Pt target) of the porous electrically conductive base material and thus a porous body sample of Comparative Example 2 was obtained.

< Comparative Example 3 >

A porous body sample of Comparative Example 3 was prepared in the same manner as in Example 1, except that the bipolar electroplating in Example 1 was replaced with electroplating using masking in Comp. Example 3. The electroplating was carried out according to the following steps. First, a degreasing treatment of surfaces of the Ti fibers (the skeleton of the porous electrically conductive base material) was carried out by subjecting the porous electrically conductive base material to ultrasonic degreasing and then electrolytic degreasing. The porous electrically conductive base material thus degreased was dried and then a circuit tape "No. 647" manufactured by Teraoka Seisakusho Co., Ltd. was attached as masking to the entirety of one surface of the porous electrically conductive base material. Next, the porous electrically conductive base material was immersed in a mixed aqueous solution of 2 wt. % ammonium hydrogen fluoride and 2 wt. % hydrochloric acid, retained in the mixed aqueous solution for approximately 30 seconds, and then immersed in an aqueous solution of 2 wt. % ammonium hydrogen fluoride and retained there for approximately 60 seconds, whereby a natural oxide film on the Ti fiber surfaces was removed.

The porous electrically conductive base material thus obtained by the aforementioned steps was subjected to electroplating according to the same steps as those in Comparative Example 1. In the electroplating, the porous electrically conductive base material was placed such that a surface opposite to the surface having the masking formed thereon, of the porous electrically conductive base material, faced the anode.

< Comparative Example 4 >

A porous body sample of Comparative Example 4 was prepared by the same steps as those in Comparative Example 3, except that a porous electrically conductive base material having porosity of 48 % was used in the former. The porous electrically conductive base material used in Comparative Example 4 was the same type as that used in Example 7.

[Evaluation of porous body]

< Evaluation of attachment amount distribution by SEM-EDX >

Each of the porous body samples obtained by Examples and Comparative Examples described above was subjected to cross-section observation by using scanning electron microscope-energy dispersive X-ray spectroscopy (SEM-EDX), whereby amounts of cumulative attachment of the metal coating film at the respective depths measured from the surface of the porous body were evaluated. The specific procedures/steps are described below.

(Exposure of cross section)

First, the porous body sample was placed in an ion milling device ("IM4000" manufactured by Hitachi High-Technologies Corporation) and irradiated with argon ions under the conditions of: acceleration voltage of 6 kV; and discharge voltage of 1.5 kV, so that a cross section of the sample was exposed. The porous body sample was placed such that the faces described below, of the porous body sample, were irradiated with argon ions during the cross-section exposure step described above. It should be noted that those faces irradiated with argon ions will occasionally be referred to as "back surfaces" and the faces opposite to the back surfaces will occasionally be referred to as "main surfaces" hereinafter.

- Examples 1 to 7: A face opposite to the face which was opposed to the anode during the bipolar electroplating
- Comparative Examples 1, 3, 4: A face opposite to the face which was opposed to the anode during the (conventional) electroplating
- Comparative Examples 2 to 7: A face opposite to the face which was opposed to the Pt target during the sputtering

(Surface analysis)

Observation and element analysis were carried out for the porous body sample of which cross section had been thus exposed, by a scanning electron microscope (SEM) "JSM-6010 LA" manufactured by JEOL Ltd. under the condition of acceleration voltage of 20 kV. The element analysis was carried out through surface analysis of elements constituting the porous electrically conductive base material and the metal coating film by using an energy dispersive X-ray spectrometer (EDX) as an accessory of the SEM.

The cumulative attachment amount of the element constituting the metal coating film was analyzed, based on the results of the surface analysis, along a line in the thickness direction of the porous body sample. The cumulative attachment amounts of the element at the respective depths were thus investigated along at least ten lines. The average attachment amount of the ten or more lines was calculated at each depth. The averages of the attachment amounts of the element at the respective depths in the thickness direction of the porous sample, thus obtained from the at least ten lines, were regarded as an attachment amount distribution in the thickness direction, of the porous body sample.

Table 1 shows the amounts of cumulative attachment of the metal coating film at the respective depths measured from the surface of the porous body. Regarding the depths, the depth which is equal to the thickness of the porous body sample represents 100 %. That is, the depth 0% corresponds to the main surface position and the depth 100 % corresponds to the back surface position. The amounts of cumulative attachment of the metal coating film were expressed as integration values (the cumulative attachment amount "100 %" represents an integration value as a result of integration from the depth 0 % to the depth 100 %).

[Table 1]

Table 1

| | Porous electrically conductive base material | | Metal coating film | Method | Auxiliary electrode | Amounts of cumulative attachment of the metal coating film at respective depths measured from surface of porous body (%) | | | | | | | | | | |
| | | | | | | Depth measured from (main) surface (%) | | | | | | | | | | |
| | Material | Porosity (%) | Material | | | 0 | 10 | 20 | 30 | 40 | 50 | 60 | 70 | 80 | 90 | 100 |
| Example 1 | Ti | 56 | Pt | Bipolar electroplating | Provided | 0 | 64 | 74 | 79 | 84 | 87 | 90 | 93 | 96 | 98 | 100 |
| Example 2 | Ti | 56 | Au | Bipolar electroplating | Provided | 0 | 61 | 69 | 74 | 79 | 82 | 87 | 90 | 94 | 98 | 100 |
| Example 3 | Stainless steel | 56 | Pt | Bipolar electroplating | Provided | 0 | 60 | 69 | 74 | 78 | 82 | 86 | 91 | 94 | 98 | 100 |
| Example 4 | Carbon | 56 | Pt | Bipolar electroplating | Provided | 0 | 56 | 73 | 82 | 84 | 86 | 89 | 92 | 95 | 98 | 100 |
| Example 5 | Carbon | 56 | Pt | Bipolar electroplating | Not provided | 0 | 40 | 67 | 75 | 83 | 86 | 89 | 92 | 93 | 97 | 100 |
| Example 6 | Ti | 89 | Pt | Bipolar electroplating | Provided | 0 | 50 | 70 | 79 | 84 | 89 | 93 | 95 | 96 | 98 | 100 |
| Example 7 | Ti | 48 | Pt | Bipolar electroplating | Provided | 0 | 62 | 70 | 76 | 80 | 83 | 87 | 90 | 94 | 98 | 100 |
| Comp. Example 1 | Ti | 56 | Pt | Electroplating | - | 0 | 9 | 22 | 31 | 40 | 48 | 58 | 69 | 79 | 90 | 100 |
| Comp. Example 2 | Ti | 56 | Pt | sputtering | - | 0 | 54 | 71 | 80 | 85 | 88 | 91 | 96 | 97 | 98 | 100 |
| Comp. Example 3 | Ti | 56 | Pt | Electroplating (with masking) | - | 0 | 21 | 39 | 53 | 63 | 72 | 80 | 87 | 94 | 98 | 100 |

| | Porous electrically conductive base material | | Metal coating film | Method | Auxiliary electrode | Amounts of cumulative attachment of the metal coating film at respective depths measured from surface of porous body (%) | | | | | | | | | | |
| | | | | | | Depth measured from (main) surface (%) | | | | | | | | | | |
| | Material | Porosity (%) | Material | | | 0 | 10 | 20 | 30 | 40 | 50 | 60 | 70 | 80 | 90 | 100 |
| Comp. Example 4 | Ti | 48 | Pt | Electroplating (with masking) | - | 0 | 20 | 35 | 48 | 57 | 66 | 77 | 84 | 90 | 96 | 100 |

As shown in Table 1, 70 % by mass or more of the metal coating film existed in a region lying within 30 % from one surface of the porous body as measured in the thickness direction in Examples 1 to 7. In contrast, the cumulative attachment amount was substantially proportional to the depth and the metal coating film was almost uniformly attached to the porous electrically conductive base material over the entirety thereof in Comparative Example 1 employing the conventional electroplating. Further, still less than 70 % by mass of the metal coating film existed in a region lying within 30 % from one surface of the porous body as measured in the thickness direction in Comparative Examples 3 and 4 each of which carried out the conventional electroplating with masking. Comp. Examples 3 and 4 had poor results presumably because plating solution still vigorously permeates the inner portion of a porous material in the plating process even when one surface of the porous material has masking provided thereon. Moreover, in a case where masking is provided, stains may attach to the back surface of the porous electrically conductive base material because the masking must be pressed against the back surface for tight adhesion. In contrast, it is possible to form a metal coating film selectively on one surface side without using masking in the bipolar electroplating.

< Evaluation of attachment amount distribution by another method >

Next, an attachment amount distribution of a metal coating film, in particular, a localization rate of the metal coating film at a surface of the porous material was evaluated by a method other than the SEM-EDX described above. The specific procedures/steps are described below.

First, porous body samples were prepared under the same conditions as those in Example 1, Comparative Example 1, and Comparative Example 2 described above, except that processing time for forming a metal coating film (plating time or sputtering time) were changed as shown in Table 2. The processing time in Comparative Example 1 did not include time required for strike plating.

(Evaluation of Pt amount in vicinities of surface by using fluorescent X-rays) An amount of Pt in the vicinities of a surface of each of the porous body samples thus obtained was measured by a fluorescent X-ray analyzer ("EA6000VX" manufactured by Hitachi Hi-Tech Science Corporation) under the conditions of tube voltage: 30 kV, tube current: 50 $\mu$A, and collimator: 3 mm $\times$ 3 mm). The measurement results are shown in Table 2. The analyzer measures only an amount of Pt existing in the vicinities of a surface of the porous body sample because a length by which X-ray can penetrate a metal under the conditions described above is in the range of a few $\mu$m to less than 20 $\mu$m.

(Evaluation of the total amount of Pt by ICP emission spectrum analysis)

Further, the total amount of Pt in each of the porous body samples obtained in Examples and Comp. Examples was measured as follows. First, a square-shaped test sample (35 mm $\times$ 35 mm) was cut out from the porous body sample. The test sample was immersed in 80 mL of aqua regia (hydrochloric acid: 2.4 mol/L, nitric acid: 0.8 mol/L) and retained in the state at 60 °C for at least 3 hours, so that Pt attached to the porous body dissolved in the aqua regia. Next, an amount of Pt in the aqua regia in which Pt had dissolved was measured by an ICP emission spectrum analyzer ("PS3500DDII" manufactured by Hitachi Hi-Tech Science Corporation) under the conditions of high frequency output: 1.2 kW and the number of times of integration: 3. The measurement results are shown in Table 2.

[Table 2]

Table 2

| | Method | Treatment time | Amount of Pt attachment (mg/cm$^2$) | | At-surface localization rate a/b (%) |
| --- | --- | --- | --- | --- | --- |
| | | | a Surface (Fluorescent X-ray) | b Entire portion (ICP emission spectrum analysis) | |
| Example 1 | Bipolar electroplating | 35sec | 0.24 | 0.34 | 72 |
| | | 15sec | 0.08 | 0.15 | 52 |
| | | 19sec | 0.12 | 0.19 | 62 |
| | | 35sec | 0.25 | 0.37 | 69 |
| | | 90sec | 0.48 | 0.58 | 82 |
| | | 120sec | 0.64 | 0.82 | 79 |

(continued)

| | Method | Treatment time | Amount of Pt attachment (mg/cm$^2$) | | At-surface localization rate a/b (%) |
| | | | a Surface (Fluorescent X-ray) | b Entire portion (ICP emission spectrum analysis) | |
|---|---|---|---|---|---|
| Comparative Example 1 | Electroplating | 240sec | 0.28 | 1.97 | 14 |
| | | 870sec | 0.80 | 5.44 | 15 |
| | | 200sec | 0.20 | 1.40 | 15 |
| | | 110sec | 0.13 | 1.02 | 13 |
| | | 50sec | 0.08 | 0.48 | 17 |
| | | 0sec | 0.03 | 0.12 | 22 |
| Comparative Example 2 | Sputtering | 22min | 0.26 | 0.26 | 100 |
| | | 3min | 0.04 | 0.04 | 82 |
| | | 7mn | 0.09 | 0.09 | 103 |
| | | 11min | 0.12 | 0.11 | 107 |
| | | 22min | 0.24 | 0.23 | 105 |

As shown in Table 2, when Example 1 was compared with Comp. Example 1 in regard to the cases thereof where the amounts of Pt in the vicinities of the main surfaces are approximately equal, the total amount of Pt in Example 1 was generally 1/3 or less of the total amount of Pt in Comp. Example 1. It should be noted that the amount of Pt attachment was not zero even when the treatment time was zero in Comp. Example 1 because a very small amount of Pt was deposited in the strike plating in the case.

For reference, a "at-surface localization rate" defined by a formula described below is also shown in Table 2. The at-surface localization rate represents a ratio of the amount of Pt existing in the vicinities of one (main) surface with respect to the total amount of Pt attached to the porous body.

$$\text{At-surface localization rate (\%)} = \text{the amount of Pt attachment measured by fluorescent X-ray/the amount of Pt attachment measure by ICP} \times 100$$

As shown in Table 2, the porous body sample of Comparative Example 1 prepared by the conventional electroplating exhibited an at-surface localization rate of $\leq 22$ % regardless of the time spent for the treatment. In contrast, the porous body sample of Example 1 prepared by the bipolar electroplating exhibited an at-surface localization rate of > 50 % regardless of the time spent for the treatment.

It is understood from the results shown in Table 1 and Table 2 that the porous body sample of Comparative Example 1, although it obtained a sufficient amount of Pt attachment in the vicinities of the main surface, exhibited substantially uniform attachment of Pt in the portions other than the vicinities of the main surface thereof, as well, thereby resulting in a significantly large overall amount of Pt attachment. In contrast, the porous body sample of Example 1 exhibited Pt attachment which was concentrated in the vicinities of the main surface, thereby resulting in a significantly small or suppressed overall amount of Pt attachment, while successfully obtaining a sufficient amount of Pt attachment in the vicinities of the main surface. In short, the porous body sample of Example 1, as compared with the porous body sample of Comp. Example 1, achieved approximately the same level of Pt amount in the vicinities of the main surface and successfully suppressed the overall amount of Pt, thereby showing better performance in terms of cost reduction than the porous body sample of Comp. Example 1.

< Evaluation of thickness of oxide film by using TEM >

Next, each of the porous body samples of Example 1 and Comparative Example 2 was subjected to cross-section observation by a TEM according to the procedures/steps described below, whereby a thickness of an oxide film existing between the metal coating film and the skeleton of the porous electrically conductive base material was measured.

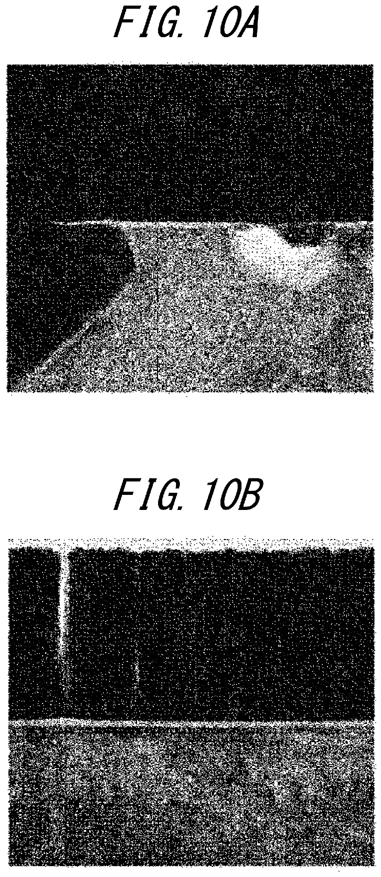

First, a thin sample having a thickness of approximately 100 nm was prepared from a fiber at a surface of the porous body sample by focused ion beam processing, for the observation by a TEM. The interface and vicinities thereof between a Pt film and Ti fiber was then observed by a transmission electron microscope ("H-9500" manufactured by Hitachi High-Technologies Corporation) at the acceleration voltage of 200 kV. The TEM images thus obtained are shown in FIGS. 10A and 10B. FIG. 10A is a cross sectional TEM image of the fiber at a surface of the porous body sample of Example 1 and FIG. 10B is a cross sectional TEM image of the fiber at a surface of the porous body sample of Comp. Example 2. Thickness of an oxide film at the interface between the Pt film and the Ti fiber was measured at the respective measuring points n1 to n9 set at the interval of 50 nm therebetween, in each of the TEM images thus obtained. The measurement results are shown in Table 3. The number of the measuring points in Comp. Example 2 is fewer than that of Example 1 because a length of the interface between the Pt film and the Ti fiber in the TEM image is different between Comp. Example 2 and Example 1. The aforementioned thickness measurement at the respective measuring points n1 to n9 were made at five different sites in each of Example 1 and Comp. Example 2. The comprehensive measurement results are shown in Table 3.

[Table 3]

Table 3

| | Thickness of oxide film (nm) | | | | | | | | | Maximum value (nm) | Minim um value (nm) | Average value (nm) |
|---|---|---|---|---|---|---|---|---|---|---|---|---|
| | Measuring points | | | | | | | | | | | |
| | n1 | n2 | n3 | n4 | n5 | n6 | n7 | n8 | n9 | | | |
| Example 1 | 7.1 | 4.4 | 2.0 | 0.9 | 2.4 | 6.2 | 6.7 | 6.0 | 6.2 | 7.1 | 0.9 | 4.7 |
| | 6.5 | 2.9 | 1.0 | 3.4 | 6.2 | 5.7 | 1.4 | 2.0 | 2.8 | 6.5 | 1.0 | 3.5 |
| | 7.2 | 2.7 | 0.6 | 6.3 | 5.8 | 5.7 | 2.2 | 2.0 | 4.7 | 7.2 | 0.6 | 4.1 |
| | 7.1 | 1.5 | 0.5 | 5.9 | 5.7 | 5.5 | 1.5 | 1.3 | 2.6 | 7.1 | 0.5 | 3.5 |
| | 3.7 | 1.0 | 2.5 | 5.8 | 5.4 | 2.8 | 1.8 | 2.3 | 2.5 | 5.8 | 1.0 | 3.1 |
| Comp. Example 2 | 7.6 | 8.7 | 6.4 | 6.9 | 6.4 | 6.7 | 6.9 | - | - | 8.7 | 6.4 | 7.1 |
| | 6.8 | 8.7 | 5.9 | 6.7 | 6.7 | 6.2 | 6.8 | - | - | 8.7 | 5.9 | 6.8 |
| | 6.6 | 7.7 | 6.4 | 6.8 | 6.3 | 6.0 | 6.3 | - | - | 7.7 | 6.0 | 6.6 |
| | 7.6 | 6.9 | 6.7 | 6.4 | 6.6 | 6.4 | 6.4 | - | - | 7.6 | 6.4 | 6.7 |
| | 7.8 | 6.8 | 6.9 | 6.9 | 6.6 | 7.8 | 6.2 | - | - | 7.8 | 6.2 | 7.0 |

As shown in Table 3, a portion in which thickness of an oxide film at the interface between the Pt film and the Ti fiber was ≤ 2 nm existed and the average thickness of the oxide film was ≤ 6.0 nm in Example 1. In contrast, a thick oxide film having the average thickness of > 6.0 nm (and no portion thereof had thickness of ≤ 2 nm) existed in Comparative Example 2. The aforementioned measurement was made for each of other Examples and it was confirmed that at least a portion of the oxide film was ≤ 2 nm in each of the Examples.

< Evaluation of contact resistance >

Water electrolysis cell samples, each of which had a structure shown in FIG. 9, were assembled by using the porous body samples of Example 1, Comparative Example 1, and Comparative Example 2 as power feeders for water electrolysis, respectively. A Nafion film having an iridium catalyst coated on the anode side and a platinum-carrying carbon catalyst coated on the cathode side thereof was used as a polymer electrolyte membrane. A current was supplied to each of the three water electrolysis cell samples thus obtained, at the different current densities shown in Tables 4 to 6, and the voltages as required for the respective conditions were recorded. The water temperature during the water electrolysis was 50 °C. Five measurements were made for each of the nine conditions shown in Tables 4 to 6, whereby the resulting five voltages and the average thereof are shown for each of the nine conditions.

[Table 4]

Table 4

| | Current density (A/cm$^2$) | Voltage (V) | | | | | |
|---|---|---|---|---|---|---|---|
| | | Measurment 1 | Measurment 2 | Measurment 3 | Measurment 4 | Measurment 5 | Average |
| Example 1 | 2.0 | 1.88 | 1.88 | 1.89 | 1.89 | 1.88 | 1.88 |
| Comp. Example 1 | 2.0 | 1.90 | 1.90 | 1.90 | 1.90 | 1.91 | 1.90 |
| Comp. Example 2 | 2.0 | 1.94 | 1.94 | 1.94 | 1.95 | 1.96 | 1.95 |

[Table 5]

[Table 5]

Table 5

| | Current density (A/cm²) | Voltage (V) | | | | | |
|---|---|---|---|---|---|---|---|
| | | Measurment 1 | Measurment 2 | Measurment 3 | Measurment 4 | Measurment 5 | Average |
| Example 1 | 1.5 | 1.78 | 1.78 | 1.78 | 1.78 | 1.78 | 1.78 |
| Comp. Example 1 | 1.5 | 1.79 | 1.79 | 1.79 | 1.79 | 1.78 | 1.79 |
| Comp. Example 2 | 1.5 | 1.84 | 1.84 | 1.84 | 1.84 | 1.85 | 1.84 |

[Table 6]

Table 6

| | Current density (A/cm$^2$) | Voltage (V) | | | | | |
|---|---|---|---|---|---|---|---|
| | | Measurment 1 | Measurment 2 | Measurment 3 | Measurment 4 | Measurment 5 | Average |
| Example 1 | 1.0 | 1.69 | 1.69 | 1.69 | 1.69 | 1.68 | 1.69 |
| Comp. Example 1 | 1.0 | 1.69 | 1.69 | 1.69 | 1.69 | 1.69 | 1.69 |
| Comp. Example 2 | 1.0 | 1.73 | 1.73 | 1.73 | 1.73 | 1.73 | 1.73 |

As shown in Tables 4 to 6, Example 1 and Comparative Example 1 exhibited substantially equal voltage values, while Comparative Example 2 exhibited a higher voltage value than those of Example 1 and Comp. Example 1 because a Ti oxide film at the interface between the Pt coating film and the Ti fibers was thick and thus worked as resistance in Comp. Example 2. The same experiment was repeated by using a plurality of porous body samples prepared under the same conditions as described above and it was confirmed that the aforementioned tendency in results was reproduced.

< Evaluation of coating ratio >

Next, a coating ratio of the metal coating film at surfaces of the porous body was evaluated by using SEM-EDX. The specific procedures/steps are described below.

First, two porous body samples were prepared under the same conditions as those of Example 1, except that the treatment time (the plating time) for forming the metal coating film was set to be 19 seconds in one porous body sample and 35 seconds in the other porous body sample.

A surface which had been opposed to the anode during the bipolar electroplating, of each of the porous body samples thus prepared, was subjected to the surface analysis by a SEM, so that Pt and Ti were detected. The surface analysis was carried out under the same conditions as those in the evaluation of Pt attachment amount distribution described above. The observation magnification by the SEM was $\times$ 100.

The data thus obtained was analyzed by using an image analysis software "ImageJ" (Rasband, W.S., ImageJ, U.S. National Institutes of Health, Bethesda, Maryland, USA, https://imagej.nih.gov/ij/), whereby an area where Pt was detected and an area where Ti was detected were determined, respectively. A coating ratio, defined as a ratio of the area where Pt was detected with respect to the area where at least one of Pt and Ti was detected, was calculated by using the values thus determined. The results are shown in Table 7. The coating ratio thus obtained represents a coating ratio in a portion detectable by SEM-EDX, of the porous body sample, i.e., a coating ratio in a range where the electron beam irradiated from above with respect to a surface of the porous body sample can reach.

It is understood from the results shown in Table 7 that each of the porous body sample having the treatment time of 19 seconds and the porous body sample having the treatment time of 35 seconds, obtained by the method of the present disclosure, achieved a high coating ratio exceeding 30 %. Contact resistance decreases when the coating ratio is high, whereby the porous body of the present disclosure is very suitably applicable to a power feeder of an electrochemical cell, or the like. In contrast, the method disclosed in PTL 2 allows a metal coating film to be formed only at the leading edge end of each projected part of the outermost surface of the foamed titanium plate and thus cannot achieve such a high coating ratio as that in the present disclosure.

[Table 7]

Table 7

|  | Treatment time (sec) | Coating ratio (%) |
|---|---|---|
| Example 1 | 19 | 36.5 |
| Example 1 | 35 | 69.7 |

In summary, the porous body sample of Comparative Example 1 was not preferable in terms of cost reduction and the porous body sample of Comparative Example 2 was not preferable in terms of performance (contact resistance) thereof. In contrast, the porous body samples of Examples were preferable in terms of both reducing cost and achieving satisfactory performance (low contact resistance).

REFERENCE SIGNS LIST

1              Plating solution
2              Plating tank
3              Anode
4              Cathode
5, 5A, 5B, 5C    Porous electrically conductive base material
6, 6A, 6B, 6C    Auxiliary electrode

| 7 | Cathode electrolyte |
| 8A, 8B | Intermediate electrolyte |
| 10 | Porous body |
| 11 | Porous electrically conductive base material |
| 12 | Metal coating film |
| 20 | Plating device |
| 30 | Electrochemical cell |
| 31 | Anode power feeder |
| 32 | Cathode power feeder |
| 33 | Polymer electrolyte membrane |
| 34 | Separator |
| 35 | Anode catalytic layer |
| 36 | Cathode catalytic layer |

**Claims**

1. A porous body comprising:

   a porous electrically conductive base material having communication voids and a skeleton forming the voids; and
   a metal coating film provided on at least a portion of a surface of the skeleton,
   wherein a porosity of the porous electrically conductive base material is 10 % or more,
   70 % by mass or more of the metal coating film exists in a region lying within 30 % from one surface of the porous body as measured in the thickness direction, and
   a thickness of an oxide film between the skeleton and the metal coating film is 2 nm or less in at least a part of the oxide film.

2. The porous body of claim 1, wherein the metal coating film is a coating film formed by electroplating carried out by indirect power feeding utilizing a bipolar phenomenon.

3. The porous body of claim 1 or 2, wherein the average thickness of the oxide film is 6 nm or less.

4. The porous body of any of claims 1 to 3, wherein the metal coating film is made of at least one noble metal selected from the group consisting of Au, Ag, Pt, Pd, Rh, Ir, Ru, and Os or an alloy thereof.

5. The porous body of any of claims 1 to 4, wherein the porous electrically conductive base material is made of at least one selected from the group consisting of a metal, carbon, and Si.

6. The porous body of claim 5, wherein the porous electrically conductive base material is made of at least one selected from the group consisting of Ti, Ta, Zr, Nb, Cu, Al, Fe, Ni, C, and Si.

7. The porous body of claim 6, wherein the porous electrically conductive base material is made of Ti or a Ti alloy.

8. An electrochemical cell comprising:

   a power feeder;
   an opposite power feeder provided to be opposed to the power feeder; and
   a polymer electrolyte membrane interposed between the power feeder and the opposite power feeder,
   wherein the power feeder is made of the porous body of any of claims 1 to 7, and
   the porous body as the power feeder is provided such that said one surface thereof is disposed on the side of the polymer electrolyte membrane.

9. A method for manufacturing a porous body including: a porous electrically conductive base material having communication voids and a skeleton forming the voids; and a metal coating film provided on a portion of a surface of the skeleton, wherein the method comprises:

   providing the porous electrically conductive base material between a cathode and an anode; and
   applying a voltage between the anode and the cathode in a state where at least a portion of a surface on the side of the anode, of the porous electrically conductive base material, is in contact with a plating solution and at least a portion of a surface on the side of the cathode, of the porous electrically conductive base material, is in contact with a cathode electrolyte, thereby electrically polarizing the porous electrically conductive base material and forming the metal coating film thereon.

10. The method for manufacturing a porous body of claim 9, wherein the application of a voltage is carried out in a state where the plating solution and the cathode electrolyte are partitioned by the porous electrically conductive base material.

11. The method for manufacturing a porous body of claim 9 or 10, wherein the application of a voltage is carried out in a state where the surface on the side of the cathode, of the porous electrically conductive base material, is in contact with an auxiliary electrode.

EP 3 933 074 A1

# FIG. 1

# FIG. 2

# FIG. 3

# FIG. 4

# FIG. 5

## FIG. 6

## FIG. 7

# FIG. 8

30

32  33  31

# FIG. 9

30

34  32  36  33  35  31  34

## FIG. 10A

## FIG. 10B

## INTERNATIONAL SEARCH REPORT

| | International application No. |
|---|---|
| | PCT/JP2020/008405 |

**A. CLASSIFICATION OF SUBJECT MATTER**
C25D 7/00(2006.01)i; C25B 11/03(2006.01)i
FI: C25D7/00 R; C25B11/03

According to International Patent Classification (IPC) or to both national classification and IPC

**B. FIELDS SEARCHED**

Minimum documentation searched (classification system followed by classification symbols)
C25D7/00; C25B11/03

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-004492 A (MITSUBISHI MATERIALS CORP.) 10.01.2008 (2008-01-10) paragraphs [0014]-[0035] | 1-11 |
| A | JP 2010-174333 A (SUMITOMO ELECTRIC INDUSTRIES, LTD.) 12.08.2010 (2010-08-12) paragraphs [0019]-[0045] | 1-11 |
| A | JP 11-329449 A (SUMITOMO ELECTRIC INDUSTRIES, LTD.) 30.11.1999 (1999-11-30) paragraphs [0019]-[0029] | 1-11 |
| A | JP 09-231983 A (SUMITOMO ELECTRIC INDUSTRIES, LTD.) 05.09.1997 (1997-09-05) paragraphs [0031]-[0040] | 1-11 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 May 2020 (07.05.2020) | 26 May 2020 (26.05.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2020/008405

| Patent Documents referred in the Report | Publication Date | Patent Family | Publication Date |
|---|---|---|---|
| JP 2008-004492 A | 10 Jan. 2008 | (Family: none) | |
| JP 2010-174333 A | 12 Aug. 2010 | (Family: none) | |
| JP 11-329449 A | 30 Nov. 1999 | (Family: none) | |
| JP 09-231983 A | 05 Sep. 1997 | US 5851599 A<br>column 8, line 42 to<br>column 10, line 22<br>EP 769821 A2<br>DE 69637082 T<br>CA 2186576 A<br>KR 10-1997-0018811 A<br>CN 1152802 A<br>HK 1000581 A<br>TW 324115 B | |

Form PCT/ISA/210 (patent family annex) (January 2015)

**EP 3 933 074 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004315933 A

- JP 2010106322 A